(19) **Europäisches Patentamt / European Patent Office / Office européen des brevets**

(11) **EP 1 147 367 B1**

(12) **EUROPEAN PATENT SPECIFICATION**

(45) Date of publication and mention
of the grant of the patent:
**11.03.2009 Bulletin 2009/11**

(51) Int Cl.:
*G01B 11/00* (2006.01)    *G05B 19/402* (2006.01)
*G01B 11/30* (2006.01)

(21) Application number: **99965228.2**

(22) Date of filing: **13.12.1999**

(86) International application number:
**PCT/US1999/029451**

(87) International publication number:
**WO 2000/036367 (22.06.2000 Gazette 2000/25)**

(54) **TOOL PATH MEASUREMENT**

WERKZEUGBAHNMESSUNG

MESURAGE DE LA TRAJECTOIRE D'OUTIL

(84) Designated Contracting States:
**AT BE CH CY DE DK ES FI FR GB GR IE IT LI LU MC NL PT SE**

(30) Priority: **14.12.1998 US 112101 P**
**29.06.1999 PCT/US99/14815**

(43) Date of publication of application:
**24.10.2001 Bulletin 2001/43**

(73) Proprietor: **Optodyne, Inc.**
**Compton, CA 90220 (US)**

(72) Inventor: **WANG, Charles**
**Compton, CA 90220 (US)**

(74) Representative: **Müller, Frank Peter et al**
**Müller Schupfner & Partner**
**Patentanwälte**
**Bavariaring 11**
**80336 München (DE)**

(56) References cited:
US-A- 4 621 926     US-A- 4 754 208
US-A- 5 106 192     US-A- 5 537 016

• **KNAPP W: "DIE PRUEFUNG DER MESSGERAETEGENAUIGKEIT MIT DEM KREISFORMTEST" TECHNISCHE RUNDSCHAU, CH,HALLWAG VERLAG. BERN, vol. 77, no. 42, 1 October 1985 (1985-10-01), pages 12-20, XP002056533 ISSN: 1023-0823**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 147 367 B1**

**Description**

**Background of Invention**

For the machining of precision and quality parts, it is important to measure the machine accuracy and performance both at static conditions (low speed or stopped) and at dynamic conditions (high speed and multiple-axis). Laser interferometers have been

used for the measurement of machine positioning accuracy at static conditions and relative to the position accuracy along each of the axes involved. That is, the measurements were not taken as the machine spindle was moving relative to the X, Y and Z axes involved for reasons including the fact that the laser systems which reflected a laser beam off of a retroreflector carried by the spindle could not intercept the reflected beam to make a measurement as the spindle was intentionally moved appreciably relative to these axes.

A prior art device which can make such measurements but under relatively low speed circular spindle movement conditions uses a telescoping ball-bar (sometimes called double ball-bar or ball-bar).

The ball-bar consists of two steel balls supported by two three-point contact magnetic sockets, which are clamped to the spindle nose and on the table of the machine. The balls are connected by a telescoping bar, and movement is detected by a transducer similar to a linear variable differential transformer. The ball clamped on the table socket is the center of rotation, while the ball on the spindle socket performs circular motions.

The control system moves the spindle around a circle having the same radius as the ballbar's length. As the path deviates from a perfect circle, the change in distance between the two ends of the device is measured by the transducer. Hence, the deviations in circular interpolation or machine geometry are detected by the telescoping ballbar. The data collected is then plotted in a polar coordinate and compared with a perfect circle.

Telescoping ballbar systems normally work with radii of 50 to 600 mm.

The invention described herein uses laser measurement systems like that disclosed in said PCT application in a manner which can measure spindle displacement error under conditions where the spindle is stopped or preferably is moved at high speeds in circular or other path configurations. In contrast to the ball-bar technique, the present invention is able presently to measure spindle displacements accurately for circular path radii varied continuously from as small as lmm (1/50th of the minimum ball-bar size) to 150 mm and larger at feed rates up to 4 m/sec. at a data rate up to 1000 data points per second with a file size up to 10,000 data points per run.

A 2-dimensional grid encoder model KGM 101, manufactured by Heidenhain, Traunrent, Germany, can be used to determine the tool path and sharp cornering. (A 2-dimensional grid encoder is similar to a glass scale linear encoder, except that the grid pattern used is 2-dimensional instead of 1-dimensional so that it is able to measure the displacement in two directions, that is in a plane.) However, this 2-dimensional system is very expensive and difficult to use. Furthermore, the gap between the reader head and the grid plate used therein is very small, so careful alignment is necessary to avoid a crash and, damage to the glass scale.

There are many less accurate prior art laser interferometer techniques for tool path measurement. For example, K.C. Lau and R.J. Hocken has developed three and five axis laser tracking systems (see U.S. Patent No. 4,714,339, granted December 22, 1987.) This patent discloses as laser interferometer using a retroreflector as target, another laser beam reflecting device and a quad-detector tracking device to point the laser beam always at the retroreflector. The position of the retroreflector is determined by the laser interferometer (radial distance) and the laser beam direction (two angles) as in a polar coordinate system. W.F. Marantette uses a machine tool position measurement employing multiple laser distance measurements; US Patent 5,387,969, discloses three laser interferometers and a scanning mirror device to point the laser beam to the retroreflector. The spindle position in a plane is determined by the measurements of the two laser interferometers using the formula of triangulation. However, these systems are very complex and less accurate than the present invention.

Another less accurate technique in one used by J.C. Ziegert and C.D. Mize (measurement instrument with interferometer and method) as disclosed in US Patent 5,428,446. It discloses the use of a laser interferometer to replace the linear transducer in a telescoping ball-bar gauge.

Since a laser interferometer is more accurate and longer range than a linear transducer, the measurement range becomes larger. Hence, it is possible to measure non-circular tool paths, and the spindle position can be determined by trilateration. However, it cannot be used to measure small circles and it is also very expensive.

Thus, the ball-bar and other prior techniques for making dynamic tool path measurements are either less accurate, less complete, more time consuming and more costly relative to that achievable with the present invention.

**Summary of Invention**

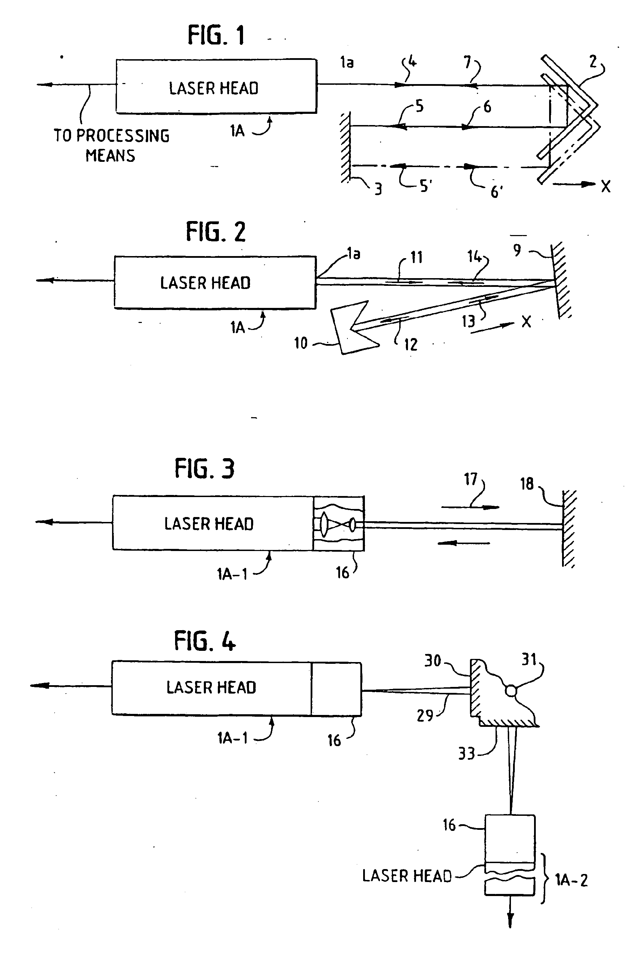

Briefly, conventional laser interferometers using a retroreflector as the target mounted on the machine tool spindle can measure the linear displacement relative to a single axis thereof accurately. However the tolerance for lateral displacement is rather small. It is an object of the present invention to provide a more simplified system with larger tolerance for displacements. The invention is claimed in claims 1 and 17. Preferred embodiments are claimed in sub-claims and described in the following description as well as in the drawings. Using preferably a single-aperture (or less desirable modified prior art two-aperture) laser target displacement measuring system like the Laser Doppler Displacement Meter (LDDM) of Optodyne, Inc. of Compton California and a large flat-mirror or unusually large retroreflector as the target, the linear displacement along the laser beam direction can be measured with large tolerance on lateral displacement under small angular shifting of the target. This angular shifting problem can be minimized using a unique diverging laser beam when a flat-mirror target is used as shown in Fig.3.

Using three such laser systems, pointing their laser head beams at 90 degree to each other, namely in the X, Y and Z axis directions, with preferably three flat-mirror targets perpendicular to the three axes respectively, the xyz-coordinate displacements of the target trajectory can be measured simultaneously. While it is preferred to place the flat mirrors on the spindle with the laser heads mounted on a stationary surface, the present invention also envisions reversing the positions of the laser heads and flat mirrors.

However, a preferred specific aspect of the present invention which reduces the equipment cost considerably to the customer is to use only one such system where the preferably stationary laser head thereof is sequentially directed along each of these axes to make three sequentially taken target displacement measurement sequences. This less costly system is only useable when the target positions can be repeated in sequence exactly, which is usually the case. In such case, three flat mirrors are preferably placed on the spindle facing in the directions of the three axes, or one flat mirror designed to be mounted sequentially on three different axially facing sides of the spindle are so placed, before each measurement sequence is taken. (As above indicated, the laser head and mirror locations can less desirably be reversed so that the laser head is mounted on the spindle target sequentially on different sides thereof and one or three mirrors are mounted on a stationary surface facing in the three directions to intercept the laser head beams.) In this form of the invention, a means is provided to synchronize the three sets of sequentially taken data so that the measurements for the corresponding positions and data sampling times of the target are related. This can be done in a number of ways, one by starting the data sampling times as the target is at the same path position when target position sampling begins. Another way is to program the tool path to do a "spike"motion, for example, a rapid back and forth motion along a 45 degree direction between the axes involved.

The invention provides data collection, storage, computing, synchronizing and outputting processing means which supplies and stores information on the deviation of the actual from the programmed target (e.g. the machine tool spindle) positions for each sampled X, Y or Z axis position of the target and preferably also from the actual desired path thereof. Thus, these means have stored therein digital data representing the desired positions of the target along the various axes for the various target position sampling times involved and this desired target position data is compared with the corresponding actual measured axis target position data involved. The resulting axis position error numbers for each sampled target path position along each axis are stored for printout as path deviation numbers for each desired path position involved.

In accordance with another aspect of the invention, the data outputting means outputs the data to a printer or plotting means which displays two sets of overlaid lines, one representing the desired target path and the other the actual path in a manner where the degree of deviation is readily visible. Usually the deviations between the actual and desired target paths are so small that these differences are not visible on the overlaid lines. This problem is overcome by multiplying the axis deviation numbers by as much as a thousand or more times, adding the multiplied numbers to the desired target position numbers along the axes at the sampling times involved and then displaying on a printer or plotting device the modified actual and programmed position-indicating lines together.

If the target trajectory is to be only a circle in one plane, it is especially desirable to store the path deviation numbers for each sampling time for number printout in polar (i.e. angular) as well as axial terms. Thus, the polar deviation error for a particular target position along the circular path involved is computed from the X and Y axis position error numbers involved by computing the square root of the sums of the squares of these numbers. Also, when the target path is to be a circle in one plane, the sequentially taken data can be synchronized easily even when the X and Y axis related data taken at the same sampling rate starts with the target at different path position points. Thus a circular path is generated and displayed by simultaneously combining the data taken along the two axes, with the maximum or minimum displacement data taken along one axis corresponding in time to the mean (half-way between minimum and maximum) values of the other. The waveforms of such data is a sine-like curve representing the position data for one axis and a cosine-like curve representing the position data for the other axis when the sampling times are equally spaced periods.

The tool path R for any path configuration can be expressed as:

$$Ri(Xi,Yi,Zi), \qquad\qquad i=1,2,...N \qquad (1)$$

Where Xi, Yi and Zi are data collected with laser system #1, #2 and #3, respectively and simultaneously where three systems are used or when one system is used sequentially as described. Once the phase relation of these three sets of data is determined as just described, the tool path Ri are determined by substituting these three sets of data into Eqn. 1. This composite tool path may be deviated from the tool path measured by 3 laser systems simultaneously if the tool path is not repeatable and the velocity of the motion is not constant. The effect of non-repeatable and non-uniform velocity of the motion can be minimized by collecting data over several cycles and using the mean values.

Similarly, for a complete 6 degree spindle motion, x, y, z, pitch, yaw, and roll, 6 laser systems can be used to measure the tool path Ri(Xi, Yi, Zi, X'i, Y'i, Z'i). The pitch angle is (Xi-X'i)/d, where d is the beam separation. The yaw and roll angles are (Yi-Yi')/d and (Zi-Z'i)/d respectively.

## IV. Description of the Drawings

Fig. 1 is a schematic showing a double-path parallel beam optical arrangement of a laser system useable in the present invention and utilizing an unusually large retroreflector facing a laser head to reflect its beam against a stationary flat mirror even when the retroreflector or the laser head is moved appreciably away from the measuring axis involved.

Fig. 2 is a schematic showing a double-path un-parallel beam optical arrangement of a laser measuring system where a flat mirror most advantageously mounted on a machine tool spindle opposite and at an angle to a laser beam directed from the laser head reflects the beam toward a stationary retroreflector much smaller than that shown in Fig. 1 and facing the flat mirror reflected beam. As compared to the Fig. 1 arrangement, the Fig. 2 system, while simpler to setup than the Fig. 1 system, is undesirably more sensitive to unwanted spindle tilt and the useable measurement range is much shorter than that for the Fig. 1 system.

Fig. 3 is a schematic showing a single-path laser system useable in the present invention, the system using a preferably stationary laser head with a beam-spreading lens system directing the diverging beam to a flat mirror preferably mounted on the machine tool spindle. As compared to the Fig.1 arrangement, it is somewhat more undesirably sensitive to the unwanted tilt of the machine tool spindle and the range of the measurement is shorter by about 25 to 50 cm. However, for most machine tools with large working volumes, this is the preferred laser system of the invention.

Fig. 4 is a schematic showing two single-aperture laser heads mounted on a stationary surface pointing their beams in the X-direction and Y-direction respectively, and two large flat mirrors mounted on a machine tool spindle, the motion of the spindle being measured by the two laser systems simultaneously.

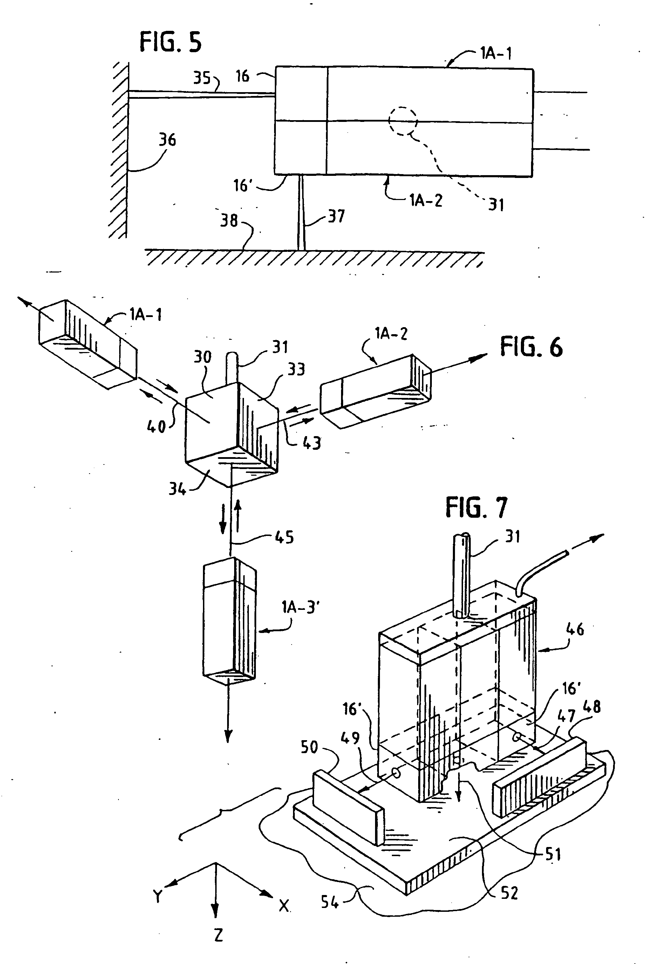

Fig. 5 is a schematic showing two single-aperture laser heads mounted on a spindle with one laser head pointing its beam in the X-direction and another laser head pointing its beam in the Y-direction and two flat mirrors mounted on the machine bed respectively perpendicular to the two laser beams, the motion of the spindle being measured by the two laser systems simultaneously.

Fig. 6 is a schematic showing a 3-dimensional laser measuring system like the two-dimensional system of Fig. 4, but with a third laser head and a third flat mirror added on the machine pointing in the z-direction.

Fig. 7 is a schematic showing a 3-dimensional Fig. 1 type measuring system similar to Fig. 5, but with a third laser head mounted on the spindle and a flat mirror added on the machine bed pointing in the Z-direction, the motion of the spindle being measured by the three laser system simultaneously.

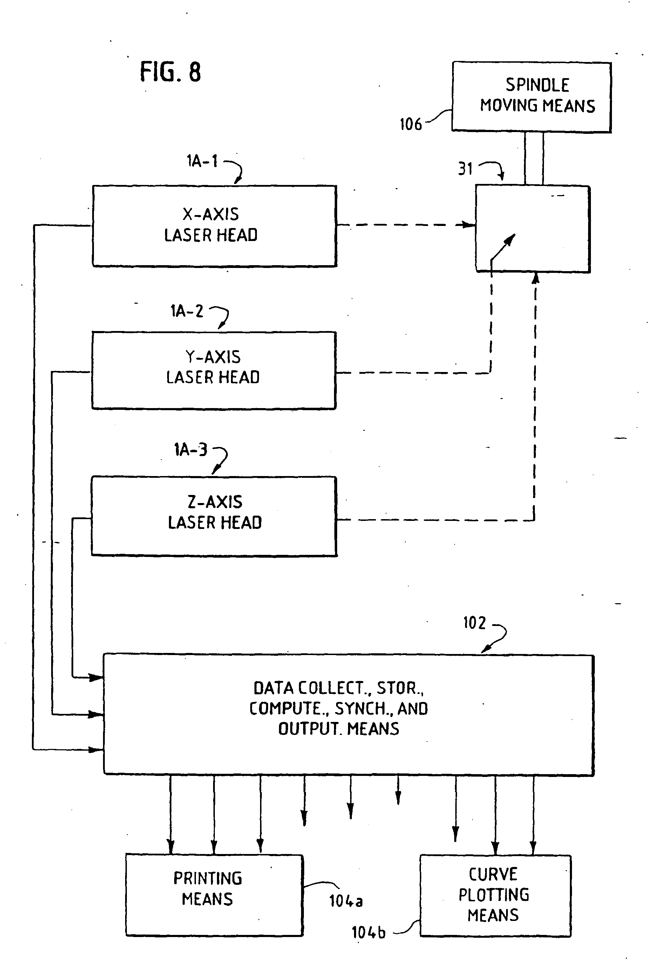

Fig. 8 is a block diagram showing three of the laser heads involved pointing their beams respectively in the X-direction, Y-direction and Z-direction. (If one system is used sequentially as previously described, then the three laser heads shown represent the one system sequentially positioned to direct its beam parallel to these directions.) Fig. 8 also shows a block representing portions of a PC or other data collection and processing system involved which collects, stores, computes, synchronizes, and outputs the computed position error data to a printer or curve plotter there shown.

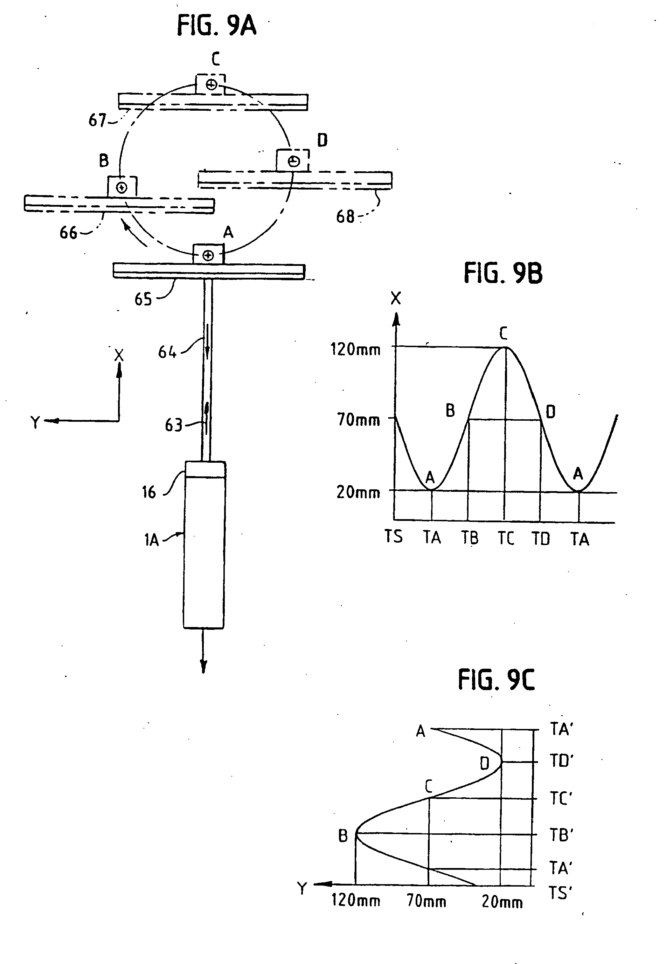

Fig. 9A is a schematic showing in solid lines a flat mirror mounted on a machine tool spindle in a (0 degree) position A, the spindle to be ideally moved clockwise 360 degrees in a circular clockwise path having 90, 180, and 270 degree positions represented respectively by reference characters B, C and D. (The 360 degree position is also shown by reference character A.)

Figs. 9B and 9C drawn respectively below and to one side of the laser system of Fig. 9A represent respectively the desired X and Y axis spindle displacement verses time curves oriented at 90 degrees to one another for the various assumed equally spaced sampling times involved, and show the X and Y axis data starting at respectively different random starting times T(S) and T(S)', the times T(A,), T(B,D), and T(C) and T(D)', T(C.A)' and T(B)' being respectively the random times when the spindle is programmed to be at the minimum, medium and maximum X and Y axis displacement points.

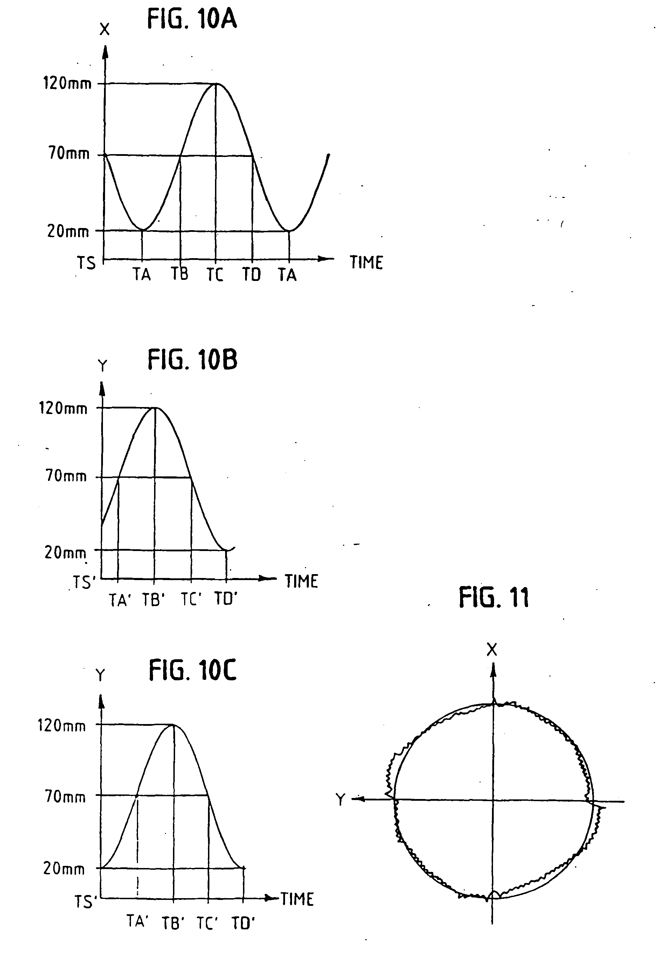

Figs. 10A and 10B are the X and Y axis displacement verses sampling time curves of Figs. 9B and 9C drawn to a horizontally oriented time base when the time axes start at times T(S) and T(S)'.Fig. 10C shows the Y axis displacement curve shifted (i.e. synchronized) so that the minimum, median and maximum x axis displacement points of the X axis data curve are opposite the median, maximum and minimum points of the medium displacement points of the Y axis data curve as they would be if such data were taken at the same rather than at different sequential random starting times.

Fig. 11 shows an ideal circular curve representing the desired programmed spindle displacement overlapped by an imperfect circular plot showing the various deviations of the actual measured spindle positions for the corresponding polar positions of the spindle, but with the deviation amounts multiplied by a factor of about 1000 so that the deviations from the actual and desired circular path can be seen.

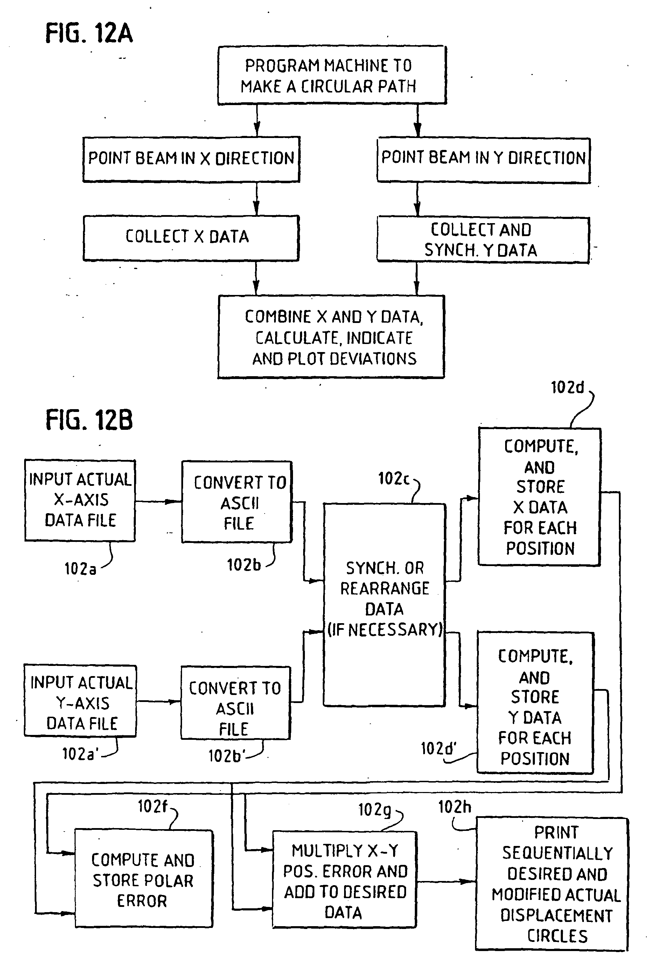

Fig. 12A is a block diagram showing the broad program routine sequences used to do a circular test in the XY-plane as shown in Fig. 11, using a single laser system sequentially to measure the spindle movements along the X and Y axes.

Fig. 12B show a much more detailed block diagram showing the more detailed program steps performed by the program involved than that shown in Fig. 12A.

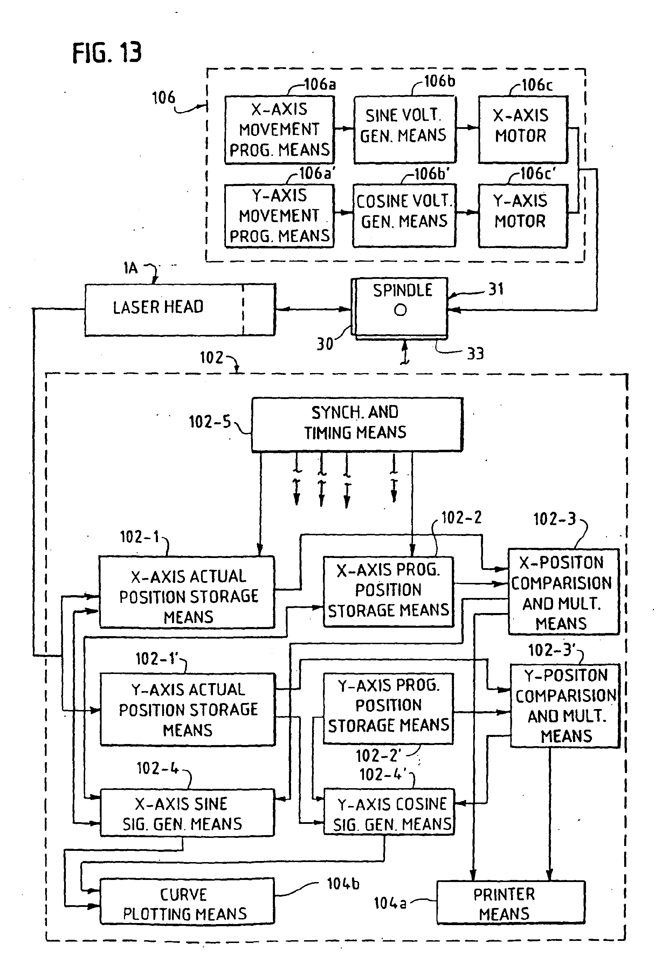

Fig. 13 is a block diagram like Fig. 8, but showing in block form using additional blocks to illustrate the functions carried out by the blocks 102 and 106 in Fig. 8, when the present invention is practiced using only one laser head sequentially positioned to direct its beam along the X and Y axes to determine and display a circular target path error.

## V. Detailed Description of The Illustrated Embodiment.

The double-path parallel beam laser system shown in Fig. 1 consists of a single-aperture laser head 1A, an unconventionally large retroreflector 2 and a flat-mirror 3. (For example, the retroreflector could be as large as 25,4 cm in diameter.) The laser head's output laser beam 4 is first reflected by the large retroreflector 2 to produce a first reflected beam 5 parallel to but displaced from output beam 4. The flat mirror 3 is perpendicular to the first reflected beam 5, hence the flat mirror-reflected beam 6 coincides with the first reflected beam 5, but in the opposite direction. The latter beam 6 is reflected again by the large retroreflector 2 to form return beam 7 which coincides with output beam 4 but in the opposite direction and is returned to the single laser heat aperture. It is noted that the property of the retroreflector 2 is that the incident beam direction and the reflected beam direction are parallel and in the opposite direction. This property is not affected by the location and angle of the incident laser beam. Also, if the retroreflector 2 is moved perpendicular to the output beam 4, the first reflected beam 5 will move to a different position on the flat mirror 3. However, the position of the return beam 7 will not change and the total path length from laser head to the flat mirror due only to this perpendicular movement remains the same. Therefore, the displacement measured is in the beam direction parallel to the X-axis shown. The X-axis measurement also will not be effected by any retroreflector movements perpendicular to the other (Y and Z) axes.

The laser head 1A and similarly identified laser heads shown in Fig. 1 and the other drawings are preferably, but not necessarily, single-aperture, single beam laser heads made and patented by Optodyne, Inc. of Compton California. U.S. Patent No. 5, 116, 126 discloses one such Optodyne laser head which, as do others, provide an accurate measure of the distance between a preferably laser beam source and a reflector opposite the beam source. One of the beam source and reflector is mounted on a target, such as a machine tool spindle, and the other on a stationary surface, like a machine tool bed. Other reflectors, in addition to the one opposite the beam source, such as those to be herein described. (Also, other but less desirable beam energy target displacement measuring systems may be used in accordance with the broadest aspects of the invention.)

Fig. 2 illustrates a double-path angular reflected laser beam system producing unparallel output and first reflected beams which can be used in the present invention. Fig. 3 of Optodyne U.S. Patent No. 5,394,233 shows such a laser beam system. This system comprises a single-aperture laser head 1A, a large flat mirror 9 directed at an angle to the output beam 11 and a preferable normal sized retroreflector 10 (to minimize system cost) much smaller than the reflector 2 in Fig. 2 and facing the beam 12 first reflected from the retroreflector 10. The output laser beam 11 is reflected by the flat mirror 9 towards the retroreflector 10. The first reflected beam 12 is reflected back by the retroreflector 10 towards the flat mirror 9 which produces a reflected return beam 14 received by the aperture of the laser head 1A.

Since the output and return beams 11 and 14 are not parallel to the reflected beams 12 and 13, when the flat mirror 9 moves forward or backward relative to the laser head 1A the return-beam 14 is still parallel but shifted from output beam 11. The amount of the shift is inversely proportional to the angle between beams 11 and 12. Hence the measurement range is longer for smaller angles or larger initial flat-mirror to laser head spacing. For example, the retroreflector 10 is placed very close to the laser head 1A. For a 5 mm diameter laser beam, the range is about +/-20% of the distance between the laser head 1B and the flat mirror 9. Also because of the double-path and the (cosine) beam angle involved, the laser reading is increased by the factor 2*Cos(theta), where 2 is for the double-path and theta is the angle between beams 11 and 12. Also, when the flat mirror 9 is moving in the Y-direction perpendicular to the illustrated X-axis measurement direction, the measurement reading of X will show Y*Sin(theta). Hence it is important to keep the angle theta small.

As in the Fig. 2 and other embodiments of the invention using two reflecting mirrors, the mirror used to reflect a beam directed to it from the reflector first receiving the laser head beam and the laser head involved can both be mounted together on a stationary surface or on the target (e.g. machine tool spindle) and the mirror which first receives the laser head beam can be mounted on the other of same.

Fig. 3, illustrates a single aperture, single path laser measurement system with a large flat mirror 18 facing the laser head 1A as the target. A lens system 16 placed adjacent to the laser head aperture converts the collimated beam of the laser head to a divergent output beam 17. The output laser beam 17 is reflected by the flat mirror 18 and returned to the laser head 1A through the lens system 16. Because the beam is divergent, the laser beam should return to the receiving aperture even when the flat-mirror 18 is undesirably tilted a small angle (less than one half of the beam divergence angle). Since the target is a large flat mirror 18, any displacement perpendicular to the incident laser beam 17 or parallel to the mirror surface will not change the path length from the laser head 1A to the flat mirror 18. Therefore, the displacement measured is in the beam direction only so that the measurement will not be affected by any displacement perpendicular to the beam direction. However, this assumes that the flat mirror is perpendicular to the laser beam 17. Any small tilt angle theta will cause a lateral coupling of Y*Sin(theta) or Z*Sin(theta).

Fig. 4 illustrates a two-dimensional laser measurement system using two laser heads 1A-1 and 1A-2 and accompanying beam-diverging lens systems 16 as shown in Fig. 3 mounted on a stationary surface. Here two flat mirrors 30 and 33 mounted on a machine tool spindle 31 are positioned to face in two different orthogonal directions along which are directed the oncoming diverging beams emanating from the lens systems 16. Hence the 2-dimensional displacement of the spindle 31 can be measured by the laser heads 1A-1 and 1A-2 simultaneously. The range of the spindle displacement is limited by the size of the flat mirrors 30 and 33.

Fig. 5 illustrates a similar two-dimensional laser measurement system where the similarly oriented mirrors 36 and 38 are shown mounted on stationary surfaces, such as on the machine tool bed, and the laser heads 1A-1 and 1A-2 are mounted together and parallel to each other . Their associated beam diverging lens systems 16 and 16' are mounted on the machine tool spindle 31. The lens system 16 is the same as that shown in Fig. 3 and directs a divergent beam 35 horizontally as viewed in Fig. 5, whereas the lens system 16' directs a divergent beam 37 beam in a downward direction as viewed in Fig. 5. The range of the spindle displacement is only limited by the size of the flat mirrors 36 and 38. For 30cm size flat mirrors, the spindle is limited to move within a 30cm range relative to each axis. Similarly, if one more laser system is added to that shown in Fig. 4 or Fig. 5, 3 dimensional spindle tool path displacement can be measured along the three axes simultaneously, as shown also in Figs. 6, and 7.

Fig. 6 illustrates a 3-dimensional laser measurement system using three laser heads 1A-1, 1A-2 and 1A-3, like that shown in Fig. 3 (although they could be other beam sources as, for example, like those shown in Figures 1 or 2). The laser heads are shown and mounted on the machine tool bed directing their beams 40, 43 and 45 simultaneously respectively along the X, Y and Z axes of the tool path movement space toward three flat mirrors 30, 34 and 33. These mirrors are mounted on the machine tool spindle 31 so as to face the respective oncoming laser heads beams 40, 43 and 45. The outputs of the laser heads shown in this Figure and in Figures 4, if they are produced by said Optodyne laser heads are binary signals which indicate the various X, Y and Z axis positions of the target involved. Timing signals generated by the processing means to which the laser head outputs are fed store the target positions at the sampling times involved.

Fig.7 illustrates a 3-dimensional laser measurement system similar to the two-axis system of Fig.5, but with one additional laser head mounted on the spindle 31. The three laser heads appear as a single housing assembly 46. The assembly 46 has laser beam-diverging lens systems 16 and 16' at the bottom thereof directing diverging beams 51 and 49 along the horizontally directed X and Y axes toward flat mirrors 48 and 50 mounted on the machine tool bed 54. The third laser head forming part of the assembly 46 directs a diverging beam downward in the Z axis direction onto a mirror 52 mounted on the top surface of the bed 54.

The Figure 6 and Figure 7 embodiments could be modified so that any of the various combinations of positions of the laser heads and flat mirrors could be used. Thus the spindle could carry one or two instead of three flat mirrors or one or two instead of three laser heads.

Fig. 8 is a block diagram showing three of the laser heads 1A-1, 1A-2 and 1A-3 involved pointing their beams respectively in the X-direction, Y-direction and Z-direction upon mirrors carried on the spindle represented by box 31. (If one system is used sequentially as previously described, then the three laser heads shown represent the one system sequentially positioned to direct its beam parallel to these directions.) Fig. 8 also shows blocks 104a and 104b representing respectively a printer and line plotter and a box 102 representing the processing portion of a PC or other data collection and processing system involved which collects, stores, computes, synchronizes, and outputs the computed position error data to the printer 104a and/or curve plotter 104b.

More specifically, some of the functions performed by the data processing means represented by the box 102 are: (a) the conversion, storing and arranging, when necessary, of the X, Y and Z axis displacement-indicating information fed from the laser heads to binary and digital form for the various equally time-spaced sampling times when measuring data is taken so that the X, Y and Z axis data for the various sampling times is identified; (b) the computing and storing for future printout of the path error differences between the desired and actual position of the spindle relative to each of the axes involved at the various corresponding sampling times; (c) the multiplying and storing of these multiplied difference values if a visual overlapping line plot of the desired and actual spindle path positions as shown in Figure 11 for a circular path; (d) the addition of the multiplied position error values to the stored data representing the ideal path positions for the sampling times involved; (e) the conversion of the various multiplied axis error values to polar values when a circular path is involved; and (f) the feeding of signals to the printer 104a or plotter 104b to read out the path error data in axial or polar error-indicating form. Where a circular line plot is desired the processing means 102 would generate sinusoidal and co-sinusoidal-like voltages representing the desired and actual spindle movements for feeding to a line plotter requiring such voltages.

Fig. 8 also shows a box 106 identified as spindle moving means whose component parts are shown in more detail in Fig. 13 which also shows individual blocks showing storage and program elements which respond to the stored position data to generate the various signals fed to the printer and plotter where the target is moved only in a circular path.

Fig.9A illustrates a circular path error test using only one laser head 1A to sequentially positioned to direct its beam along the X and Y axes where target position measurements are taken without concern for the position of the target when a measurement sequence begins and is taken at predetermined sampling rate. In the system there illustrated, the laser head 1A mounted on a stationary surface has a beam-diverging lens system 16 directing a beam 63 to a flat mirror 65 mounted on a machine tool spindle to be moved in a clockwise circular path. The X-axis directed output diverging laser beam 63 is shown reflected by the flat mirror 65 and returned to the laser head 1A as a return beam 64. Because the beam is divergent, the laser beam should return to the laser head receiving aperture even when the flat mirror 65 is undesirably tilted by a small angle. The reference characters A, B C and D in Fig. 9A show the flat mirror-carrying spindle positions at the 0, 90, 180 and 270 degree positions of the desire circular path involved. The output beam 63 is always reflected back as beam 64 by the flat mirror 65 at the A, B, C and D and the positions therebetween. After measurements are taken at the selected sampling times with the beam directed along the X axis,

To complete the circular path test, the laser head 1A is moved to point where it directs a divergent beam parallel to the other or Y axis involved. The flat mirror 65 can be designed to be remounted on the spindle 31 to be perpendicular to the Y axis directed laser beam. Another set of measurements at the same sampling rate are then taken as the spindle is moved again in the same preferably repeatable circular path. By combining the data taken along the X and Y axes, circular tool path indicating signals can be generated and fed to a printer or plotter to draw the ideal and actual circular path movements.

In the explanation of the circle test now to follow, the times when random measurement of spindle position along the X-axis begins will be indicated respectively by T(S) and T(S)' . The random times when the spindle reaches the A, B, C and D positions on the circular path involved for the X and Y axis measurements will be indicated respectively by T(A), T(B), T(C) and T(D) and T(A)', T(B)', T(C)', and T(D)'.

Figs. 9B and 9C drawn opposite Fig. 9A represent respectively the actual X and Y axis spindle displacement verses time curves oriented at 90 degrees to one another for the various assumed equally spaced sampling times involved, and show the X and Y axis data starting at respectively the different random starting times T(S) and T(S)', Note that at the times T(A), T(B), and T(C) and T(A)', T(B)' and T(C)' representing the time during the sequential measurements when the spindle is programmed to be at the circle positions A, B, C and D that the X axis measurements are respectively at their minimum, median (i.e. half way between their minimum and maximum values), maximum and median X axis displacement positions and the Y axis measurements are respectively at their median, maximum, median and minimum Y axis displacement positions. Figs. 9B and 9C so indicate as they also indicate that relative to the data collection starting times T(S) and T(S)' the collected data at times T(A) -T(A)', T(B) -T(B)', T(C)-T(C)' and T(D)-T(D)' do not occur at the same times relative to the starting times. In order to be able to output signals to the printer or plotter which will draw circular lines the collected data must be related so that the stored measurement is synchronized or repositioned in storage so that the corresponding A, B, C and D position data is located at the same time slots relative to the start measurement times T(S) and T(S)'. This synchronizing process is illustrated in Figs. 10A, 10B and 10C.

Accordingly, Figs. 10A and 10B are the X and Y axis displacement verses sampling time curves of Figs. 9B and 9C drawn to a horizontally oriented time base when the time axes start at times T(S) and T(S)'. Fig. 10C shows the Y axis displacement curve shifted so that the minimum, median and maximum X axis displacement points of the X axis data curve are opposite the median, maximum and minimum Y axis displacement points, as they would be if such data were taken at the same rather than at different sequential random starting times.

Fig. 11 shows an ideal circular curve representing the desired programmed spindle displacement overlapped by an imperfect circular plot showing the various deviations of the actual measured spindle positions for the corresponding polar positions of the spindle, but with the deviation amounts multiplied by a factor of about 1000 so that the deviations from the actual desired circular path curve can be seen displaced from the desired curve where displacement errors exist. The result of this multiplication operation is added to the corresponding desired displacement data. The thus modified and synchronized actual X and Y axis position data is converted to corresponding X and Y axis data analog signals and fed to a plotter which receives such analog signals to draw the actual position curve shown in Fig. 11. A printer which receives digital data can be programmed to do the same thing digitally so that the digital printer prints or draws lines representing the desired circular and near circular path position lines like that shown in Fig. 11.

Fig. 12A is a block diagram showing the broad program routine sequences used to do a circular test in the XY-plane as shown in Fig. 11, using a single laser system sequentially to measure the spindle movements along the X and Y axes;

Fig. 12B shows a much more detailed block diagram showing the detailed program sub-routines of the boxes in Fig. 12B. Thus, Fig. 12B shows blocks or boxes numbered 102 followed by different alphabet characters a-h and some with primes (') thereafter represent the various means of the software and/or hardware involved which perform the functions identified in each of the boxes shown. The box labeled 102 in Fig. 8 includes all of these means now to be described. Accordingly, boxes 102a and 102a' identify the means which input the binary data developed by the X and Y axis laser heads to a data file; boxes 102b and 102b' identify the means which converts this binary data to Ascii file (i/e/ digital) data; and common box 102c are the means which synchronizes or re-arranges this data so that the maximum, means and minimum values of the Xdata is opposite or corresponds respectively to the mean, minimum and maximum values of the Y data.

The re-arranged X and Y axis actual object spindle data outputted by the means represented by the common box 102c is fed to the means represented by the boxes 102d and 102d' labeled "Compute and store X data" and "Compute and store Y data" for each position. As previously indicated, these functions preferably include a subtraction and storing operation where the actual X and Y axis error value for each spindle position is indicated in memory. The output of boxes 102d and 102d' are shown fed to a box 102f labeled "Compute and store polar error". This box represents the function of computing the square root of the squares of the X and Y. axis data so that the actual angular or polar error for each spindle position is recorded.

The next box 102g shown fed by the output of boxes 102d and 102d' is labeled "multiply X-Y position error and add to desired date". Thus, this box represents the function performed by the means which multiplies by about 1000 or more in most cases the X and Y axis error data for each spindle position and adding the multiplied data to the corresponding desired programmed position value for each position involved. The output of box 102g as shown fed to the next box 102h labeled "Print sequentially desired and modified actual displacement circles" which carries out the function of outputting signals to the printer or plotter involved to display the perfect and imperfect circular lines shown in Fig. 11.

Fig. 13 is a block diagram like Fig. 8 but showing in block form more of the functions carried out by the data collection, storage and processing means shown as a single block 102 in Fig. 8, and wherein a single laser head is used sequentially as described to obtain X and Y axis data to be synchronized, compared, multiplied and then fed to a printer or plotter to draw the overlapping curves of Fig. 11.

Fig. 13 thus has blocks or boxes namely: boxes 102-1 and 102-1' identified respectively as X and Y axis actual position storage means which store the actual X and Y axis object position data; boxes 102-2 and 102-2' identified respectively as X and Y axis desired position storage means which store the desired programmed X and Y axis object position data for the various assumed object positions for which the actual position data was taken; boxes 102-3 and 102-3' coupled to the outputs of the latter boxes and respectively identified as X and Y position comparison and multiplying means which subtracts the desired and actual position data for each of these positions to determine and store the position error and then multiplies the error computations and stores the same; box 102-5 identified as the synchronizing and timing means which controls the timing of the functions performed by the aforesaid boxes; a box 104 identified as a synchronizing and timing means; boxes 102-4 and 102-4' respectively identified as X and Y axis sine and cosine signal generating means coupled to the outputs of the latter boxes; 102-1, 102-1', and 102-3 and 102-3' to generate the sine and cosine signals which when fed to a curve plotting means shown as box 104b will plot circular or circular-like curves as shown in Fig. 11; printing and curve plotting means; and a dashed box 106 which has boxes identified as X and Y axis movement programming means 106a and 106a' coupled to the inputs of boxes 106b and 106b' respectively identified as sine and cosine voltage generating means shown coupled respectively to X and Y axis motors 106c and 106c' which control the movement of a machine tool spindle 31. Fig. 13 also shows a box 104a representing a printer means which receives signals from the X and Y position comparison and multiplying means 102-3 and 102-3' to print circle-like curves from the data stored therein.

For a more general analysis of the operation of the present invention to any two or three dimensional tool path measured by 2 or 3 laser systems, as in the case of the two-dimensional circular path measurement system just reviewed, the data actual target position data is collected at a fixed data rate and synchronized by latching all three data measurements to the same time base (within a small electronic delay time). The tool path R can be expressed as...

$$Ri(Xi,Yi,Zi), \qquad i=1.2,...N \qquad\qquad (2)$$

where $X_i$, $Y_i$ and $Z_i$ are data collected with laser #1, #2 and #3 respectively. Assume the programmed tool path is

$$r_j \ (x_j, y_j, z_j), \qquad j=1,2,\ldots M \qquad\qquad (3)$$

First, take two reference points from the programmed tool path and the two corresponding points on the measured tool path. Translate the coordinate system in the measured tool path such that the first reference point r (ref 1) in the programmed tool path coincide with the first reference point R (ref 1) in the measured tool path. That is

$$r \ (ref\ 1) \ = R \ (ref\ 1) \qquad\qquad (4)$$

The second reference point is used to check the scales and the angle of the coordinate systems between the measured tool path and the programmed tool path.

For a 2 dimensional tool path, plot both the programmed tool path r and the measured tool path R on the same graph and compare the differences.

For a 3 dimensional tool path, we can project the 3 dimensional tool path to three 2 dimensional tool paths and compare the differences of each 2 dimensional tool paths.

If the differences are very small, the tool path differences $D = /r-R/$ can be calculated along the normal of the programmed tool path.

For most CNC Machines, the tool paths are very repeatable. It is possible to use only one laser system but measures three times, in X-direction, Y-direction and Z-direction respectively. The three sets of data collected should be the same as the three sets of data collected simultaneously, except the phase relations between these three sets of data have to be determined. The phase relations can be determined by either using an external trigger signal at the same location, or by using a sharp turn on the same location as a marker. Once the phase relations between the three sets of data are determined, the tool path $R_i$ can be generated by the measured $X_i$, $Y_i$, and $Z_i$.

For example, as shown in Fig. 9A, pointing the laser beam in the X-direction and mounting the flat-mirror target on the spindle, the X-coordinate of the spindle motion can be measured even with large Y-direction movement. By repeating the measurement in the Y-direction, the Y-coordinate of the spindle motion can be measured. Assume the spindle motion is repeatable to certain tolerance, the data on X-coordinate and Y-coordinate can be combined to generate the circular spindle path. As shown in Figs. 10A, 10B and 10C, the measurement data in the X-direction and in the Y-direction can be combined to generate the circular path. Since the actual tool path is not a perfect circle, the curve as shown are not perfect sine or cosine functions. Hence the combined circular path is not a perfect circle. The deviation from a perfect circle can be calculated and plotted in Fig. 11. The maximum deviation larger than the perfect circle is the $F_{max}$, the maximum deviation smaller than the perfect circle is the $F_{min}$, and the mean deviation from the perfect circle is the circularity.

The following are the actual test conditions for the Fig. 11 plot:

Measuring plan: XY
Direction: X and Y
Feedrate: 50cm/min
Sampling rate : 30/s
Rotation sense: clockwise
Radius: 5cm
Starting point : X= 50,8cm
      Y= 25,4cm
Distance from target: 76,2cm
Measuring radius: 50.80234 mm.
Circularity: $\pm$) 2,8$\mu$m rms
Radial deviation:
$F_{xy, max}$ = + 8,941 $\mu$m.)
$F_{xy, min}$ = - 7,163 $\mu$m)

(continued)

(rms = root mean square).

The composite tool path can be used to compare the programmed tool path as discussed previously. Of course, the accuracy of this composite tool path is limited by the repeatability of the tool paths and the speed fluctuations of the tool paths. To minimize these effects, it is possible to measure the tool path over several cycles and use the mean value as the measured tool path.

In summary, most CNC Machines are very repeatable, Hence, using only one laser system, the tool path in 2 or 3 dimensions can be measured.

The most important, but not the only, application of the invention is the one described above where the invention determines the accuracy which a machine tool or the like moves an object in a path where there desirably would not be any angular or rotational motion between the beam directing means and the reflector which first receives the beam. However, the invention in its broadest aspects is also applicable in providing a measure of the accuracy of the object moving apparatus involved where the object is desirably to be rotated or pivoted so that the object is to have a desired pitch, yaw and roll motion in addition to an X, Y and Z axis motion. To measure object movement error for all of these motions would require 6 laser measuring systems or operations. In other words, the object measuring operations would require three such systems operated simultaneously as described above to measure the X, Y and Z axis motion accuracy (or one such system operated sequentially as above described) and three more such systems (or one more operated sequentially three more times) to collect the data necessary to compute the pitch, yaw and roll error (resulting from the movement of the object along the same path as before but with the desire pitch, yaw and roll motions imparted to the object at the same path positions the object had during the axial error path determining measurements.) The latter error computations require error computing equations different from those used described above in the X, Y and Z axis error application of the invention.

Accordingly, the claims are intended to cover all of these applications of the invention. The laser measuring system of Fig. 1 using a large retroreflector as shown is the preferred measuring system for the application of the invention for determining the pitch, yaw and roll error data. For this application of the invention, the position error data is collected in the same way as above described for measuring X, Y and Z axis error as the object being moved is moved along the same path but with pitch, yaw and roll components of motion added to the axial components of motion. although the data processing functions are different due to the different equations needed to compute the pitch, yaw and roll error involved.

While, the simple large retroreflector shown in Fig. 1 is the preferred retroreflector, the one shown could be replaced by a corner cube, solid prism, cat-eye or other type of retroreflector.

**Claims**

1. A system for determining the degree of accuracy with which an object is moved along a given path in a space having at least two orthogonal axes (x, y),

   that system comprising an object moving apparatus (106) which comprises one motor (106c, 106c') each for imparting object movement relative to said respective axes (x, y) to produce an overall object movement path, that apparatus comprising programming means (106a, 106a') with memory adapted to store the desired object path position data relative to said axes (x, y) at various reference times,

   that system comprising generating means (106b, 106b') which are responsive to said desired path position data for generating motor-energizing signals for said motors (106c, 106c') to desirably move said object along said desired path within a given tolerance of lateral displacement, said system further comprising:

   al) either more than one beam directing means (1A) adapted to simultaneously direct at least a beam (29, 35, 37, 40, 43, 45, 47, 49, 51) of energy parallel to said axes (x, y),

   a2) or one single beam directing means (1A) adapted to sequentially direct at least a beam (4, 11, 17) of energy parallel to one of said axes (x, y) at a time;

   b) said system further comprising at least one beam reflecting means (2, 9, 30, 33, 34, 36, 38, 48, 50, 51) associated with each beam directing means (1A) and positioned to directly receive the beam (x, y) from its associated beam directing means (1A);

   wherein at least one of each of said beam directing means (1A) and of said reflecting means (2, 9, 18, 30,33, 34, 36, 38, 48, 50, 51) associated therewith are mountable on said object and the other of these means are mountable on a surface which is relatively stationary with regard to said object;

wherein said at least one reflecting means (2, 9, 30, 33, 34, 36, 38, 48, 50, 51) associated with beam directing means (1A) is at least as large as said given tolerance of lateral displacement to reflect such directed beam (4, 11, 17, 29, 35, 37, 40, 43, 45, 47, 49, 51) to ultimately return the beam to said beam directing means (1A);

c) said system further comprising signal processing means (102) including means responsive to the return of each reflected beam (5, 12, 14) of energy to the associated beam directing means (1A) for developing actual object path position data indicating the actual displacement of said object relative to said axes (x, y) at sampling times coincident with said reference times; and

d) said system further comprising additional processing means, including data collection means, storage means (102-2), comparing means (102-3) and data outputting means (102-4, 102-4') for collecting and storing said desired and said actual object path position data relative to said axes (x, y) at said reference and sampling times, and for comparing the stored desired and actual position data at said reference and sampling times and for indicating the degree of position error relative to said axes (x, y) at said sampling times.

2. The system of claim 1 wherein said at least one reflecting means (2, 9, 30, 33, 34, 48, 50, 51) associated with each beam directing means (1A) is a flat mirror (9, 18, 36, 38).

3. The system of claim 2 wherein the associated beam directing means (1A) includes lens means (16, 16') for directing a diverging beam to said flat mirror (9, 18, 36, 38).

4. The system of one of the preceding claims wherein there is provided a separate beam directing means (1A-1, 1A-2, 1A-3) for each axis (x, y, z) so that three beams (40, 43, 45) can be simultaneously directed along each of said axes, simultaneously to collect said actual object position data.

5. The system as claimed in one of the previous claims wherein there is provided only one of said beam directing means (1A) to direct a single beam (4, 11, 17) sequentially when re-positioned to do so parallel to said various orthogonal axes (x, y) as said object moving apparatus (31) repeats the movement of said object along a supposed desired path, to sequentially develop said actual object path position data relative to said respective axes (x, y) and said processing means including synchronizing means (102) for relating the actual object position data relative to said respective axes (x, y) taken in time sequence at said sampling times to the same positions of said object along its path of movement.

6. The system of claim 5 adapted for collecting and processing object position data where the object is to be desirably moved in a circular path in a given plane having two orthogonal axes (x, y) and where said single beam source (1A) is to direct its beam (4, 11) sequentially along said axes (x, y) in said plane; and said synchronizing means (102) including comparing means (102-3) for relating the object path position data relative to said axes (x, y) representing the same various object positions along the circular path, and said comparison means (102-3) and said outputting means (102-4, 102-4') being adapted to compare the corresponding actual and desired path position data at each of said object path positions and to output signals representing the actual and desired object path positions to a printer (104a) or plotter (104b) to provide a first circle-like display representing the actual object movement along said circular path and a second circular display overlying said first display so that the object position error at the various path positions is visually seen.

7. The system of claim 6 wherein said synchronizing means (102) includes means permitting the sequentially obtained object position data along each of said axes to be taken at random starting times by identifying the maximum, minimum and mean (i.e. half way between the minimum and maximum) actual and desired object position data values and rearranging the stored data so that the maximum, mean and minimum object position values of the data for one axis (x, y) is related to the mean, minimum and maximum values of the data taken for the other axis (y, x).

8. The system of claim 6 wherein said signal processing means includes multiplying means (102g) for multiplying the object position error data and re-combining the multiplied data with the actual position data so that when outputted to said printer (104a) or plotter (104b) the first circle-like display representing the actual object path can be readily seen although adjacent to said second circular display representing the desired object path.

9. The system of one of the preceding claims, wherein there is provided a different beam directing means (1A-1, 1A-2, 1A-3) for each of said axes (x, y, z) and oriented to direct its beam parallel to the associated axis, and there being a different one of said at least one reflecting means (30, 33, 34) associated with a beam directing means mounted to intercept the beam directed from the associated beam directing means, and there is provided means for simultaneously operating said beam directing means (1A-1, 1A-2, 1A-3) to simultaneously collect and process the actual object position data.

10. The system of one of the preceding claims, wherein each of said one or more beam directing (1A) and associated beam reflecting means (2, 3, 18, 32, 33, 36, 38, 48, 50, 52) form an object position measuring system with a large retroreflector and a flat mirror.

11. The system of one of the preceding claims, wherein, the object is to be moved along said path where at some of the path positions thereof the object is to desirably to be rotted or pivoted producing a desired angular motion; and there is provided added beam directing, reflector and processing means for measuring the actual angular motion of the object at each of said path positions, and comparing the actual with the desired angular motions of the object threat to provide a measure of the angular movement accuracy of the object moving apparatus.

12. The system of one of the preceding claims, wherein the.size of the reflecting surface of the beam reflecting means (2, 9, 18, 30, 33) is 25 cm or 30 cm in diameter.

13. Method for determining the degree of accuracy with which an object is moved along a given path in a space having at least two orthogonal axes (x, y),
   that method comprising object moving by motors (106c, 106 c') for imparting object movement relative to said respective axes (x, y) to produce an overall object movement part,
   that method comprising storing the desired object path position data relative to said axes (x, y) at various reference times,
   that method comprising generating motor-energizing signals for said motors (106c, 106c') responsive to said desired path position data to desirably move said object along said desired path within a given tolerance of lateral displacement, said method further comprising the steps of:

   m) providing one or more beam directing means (1A) for directing at least a beam (4, 11) of energy parallel to one of each of said at least two orthogonal axes (x, y);
   n) providing one or more beam reflecting means (2, 9, 18, 30, 33, 34, 36, 38, 48, 50, 51) associated with beam directing means (1A) for reflecting each of said beams (4, 11) of energy along one or more beam paths which will ultimately return each beam back to its associated beam directing means (1A),
   wherein at least one of the reflecting means (2, 9, 18, 30, 33, 34, 36, 38, 48, 50, 51) associated with beam directing means (1A) which first receives the directed beam is at least as large as said given tolerance of lateral displacement,
   and wherein one of each of said beam directing means (1A) and said at least one reflecting means (2, 9, 18, 30, 33, 34, 36, 38, 48, 50, 51) associated therewith are mounted as follows: one of said means is mounted on said object and the other of said means is mounted on a surface which is relatively stationary with regard to said object,
   o) providing signal processing means (102) including means responsive to the return of each reflected beam of energy to the associated beam directing means (1A) for developing actual object path position data indicating the actual displacement of said object relative to said axes (x, y) at sampling times coincident with said reference times;
   p) providing data collection means and storage means (102-2), for collecting and storing said desired and said actual object path position data relative to said axes (x, y) at said sampling times, and providing comparing means (102-3) for comparing the stored desired and actual path position data at said sampling times and providing outputting means (102-4, 102-4') for indicating the degree of path position error relative to said axes at said sampling times; and
   q) directing said one or more beams (4, 11, 29) parallel to said axes (x, y) and operating said object moving apparatus to move said body along a supposed desired path while said signal processing means (102) develops, collects and stores said actual object path position data, compares the stored desired and actual path position data and indicates the degree of position error resulting from said comparison operation.

14. The method of claim 13, wherein there is provided a separate beam directing means (1A-1, 1A-2, 1A-3) for each of said axes (x, y, z) and said separate beam directing means (1A-1, 1A-2, 1A-3, 16) are simultaneously directed, respectively, along said axes simultaneously to collect said object path position data.

15. The method of claim 13, wherein there is provided only one of said beam directing means (1A) which is sequentially directed along said axes (x, y) as said object is moved along the supposed desired path as said processing means (102) then sequentially carries out said functions thereof.

16. The method of claim 15, wherein there are provided synchronizing means (102-5) in said processing means for relating the actual sequentially obtained object position data relative to said respective axes (x, y), taken in time sequence to the same positions of said object along its path of movement following which said processing means carries out said comparison function.

17. The method of claim 16, wherein said processing means first multiplies (102g) the position error data, combines the multiplies error data with said desired object position data relative to said two axes and effects the display (102h) of a first given imperfect circular-like curve representing the modified actual circular path of said object in said plane, and combines said desired object position data relative to said axes (x, y) and effects the display (102h) over said first given imperfect circular curve the circular curve produced by said actual object position data relative to said axes.

18. The method of one of claims 12 - 17, wherein said comparison means (102-3, 102-3') first computes the path position error relative to said axes and then combines the axis position error to provide an indication of polar position error.


**Patentansprüche**

1. System zur Bestimmung des Grads an Genauigkeit, mit dem ein Gegenstand bzw. ein Objekt entlang einem vorgegebenen Pfad in einem Raum, der mindestens zwei orthogonale Achsen (x, y) hat, bewegt wird, wobei das System eine Vorrichtung zum Bewegen des Objekts bzw. einen Objektbewegungsapparat (106) umfasst, der je einen Motor (106c, 106c') umfasst, um eine Objektbewegung in Bezug auf die entsprechenden Achsen (x, y) zu erteilen bzw. zu bewirken, um einen Gesamtgegenstandsbewegungspfad zu erzeugen, wobei der Apparat Programmiermittel (106a, 106a') mit einem Speicher umfasst, der dazu geeignet ist, die gewünschten Objektpfadpositionsdaten in Bezug auf die Achsen (x, y) zu verschiedenen Referenzzeiten zu speichern, wobei das System Generierungs- bzw. Erzeugungsmittel (106b, 106b') umfasst, die auf die gewünschten Pfadpositionsdaten reagieren, um Motoransteuerungssignale für die Motoren (106c, 106c') zu erzeugen, um erstrebenswerterweise das Objekt entlang dem gewünschten Pfad innerhalb einer vorgegebenen Toleranz an seitlicher Verschiebung zu bewegen, wobei das System ferner umfasst:

al) entweder mehr als ein Strahllenkungsmittel (1A), das dazu geeignet ist, gleichzeitig wenigstens einen Strahl (29, 35, 37, 40, 43, 45, 47, 49, 51) aus Energie parallel zu den Achsen (x, y) zu richten bzw. zu lenken, a2) oder ein einziges Strahllenkungsmittel (1A), das dazu geeignet ist, wenigstens einen Strahl (4, 11, 17) aus Energie parallel zu einer der Achsen (x, y) jeweils aufeinanderfolgend zu richten, b) wobei das System ferner ein Strahlreflektierungs- bzw. -rückstrahlmittel (2, 9, 30, 33, 34, 36, 38, 48, 50, 51) umfasst, das mit jedem Strahllenkungsmittel (1A) assoziiert und so positioniert ist, um den Strahl (x, y) von seinem zugehörigen bzw. assoziierten Strahllenkungsmittel (1A) direkt aufzunehmen, wobei wenigstens eines jedes Strahllenkungsmittels (1A) und zugehörigen bzw. assoziierten Reflektierungsmittels (2, 9, 18, 30, 33, 34, 36, 48, 50, 51) auf dem Objekt befestigbar ist, und die anderen dieser Mittel auf einer Oberfläche bzw. Fläche befestigbar sind, die in Bezug auf das Objekt relativ ortsfest ist, wobei das wenigstens eine Reflektierungsmittel (2, 9, 30, 33, 34, 36, 38, 48, 50, 51), das mit dem Strahllenkungsmittel (1a) assoziiert ist, wenigstens so groß wie die vorgegebene Toleranz an seitlicher bzw. lateraler Verschiebung ist, um den so gelenkten Strahl (44, 111, 17, 29, 35, 37, 40, 43, 45, 47, 49, 51) zu reflektieren, um den Strahl schließlich zu dem Strahllenkungsmittel (1A) zurückzuführen, c) wobei das System ferner Signalverarbeitungsmittel (102) umfasst, die Mittel umfassen, die auf die Rückkehr jedes reflektierten Strahls (5, 12, 14) aus Energie zu dem assoziierten Strahllenkungsmittel (1A) reagieren, um tatsächliche Objektpfadpositionsdaten zu entwickeln, die die effektive bzw. tatsächliche Verschiebung des Objekts relativ zu den Achsen (x, y) zu Abtastzeiten angeben, die mit den Referenzzeiten zusammenfallen, und (d) wobei das System ferner zusätzliche Verarbeitungsmittel umfasst, die Datensammelmittel, Speichermittel (102-2), Vergleichsmittel (102-3) und Datenausgabemittel (102-4, 102-4') enthalten, um die gewünschten und tatsächlichen Objektpfadpositionsdaten in Bezug auf die Achsen (x, y) zu den Referenz- und Abtastzeiten zu sammeln und zu speichern, und um die gespeicherten gewünschten und tatsächlichen Daten zu den Referenz- und Abtastzeiten zu vergleichen und um den Positionsfehler- bzw. -abweichungsgrad in Bezug auf die Achsen (x, y) zu den Abtastzeiten anzugeben.

2. System nach Anspruch 1, wobei wenigstens ein Reflektierungsmittel (2, 9, 30, 33, 34, 38, 48, 50, 51), das mit jedem Strahllenkungsmittel (1A) assoziiert ist, ein Planspiegel (9, 18, 36, 38) ist.

**EP 1 147 367 B1**

3. System nach Anspruch 2, wobei das zugehörige Strahllenkungsmittel (1A) Linsenmittel (16, 16') enthält, um einen divergierenden Strahl auf den Planspiegel (9, 18, 36, 38) zu richten.

4. System nach einem der vorhergehenden Ansprüche, wobei ein separates Strahllenkungsmittel (1A-1, 1A-2, 1A-3) für jede Achse (x, y, z) vorgesehen ist, so dass drei Strahlen (40, 43, 45) gleichzeitig entlang jeder der Achsen gerichtet werden können, um gleichzeitig die tatsächlichen Objektpositionsdaten zu sammeln.

5. System nach einem der vorhergehenden Ansprüche, wobei nur eines der Strahllenkungsmittel (1A) vorgesehen ist, um einen einzelnen Strahl (4, 11, 17) beim Neupositionieren sequenziell zu richten, und zwar parallel zu den verschiedenen orthogonalen Achsen (x, y), wenn der Objektbewegungsapparat (31) die Bewegung des Objekts entlang einem angenommenen gewünschten Pfad wiederholt, um die tatsächlichen Objektpfadpositionsdaten relativ zu den jeweiligen Achsen (x, y) sequenziell zu entwickeln, und wobei die Verarbeitungsmittel Synchronisierungsmittel (102) enthalten, um die tatsächlichen Objektpositionsdaten relativ zu den jeweiligen Achsen (x, y), aufgenommen in zeitlicher Abfolge bzw. Zeitverlauf zu den Abtastzeiten, zu denselben Positionen des Objekts entlang seinem Bewegungspfad in Beziehung zu setzen.

6. System nach Anspruch 5, geeignet für das Sammeln und Verarbeiten von Objektpositionsdaten dort, wo das Objekt wünschenswerterweise in einem kreisförmigen Pfad bzw. einer Kreisbahn in einer vorgegebenen Ebene mit zwei orthogonalen Achsen (x, y) zu bewegen ist, und wo die Einzelstrahlquelle (1A) ihren Strahl (4, 11) sequenziell entlang den Achsen (x, y) in der Ebene richten soll; und wobei die Synchronisierungsmittel (102) Vergleichsmittel (102-3) enthalten, um die Objektpfadpositionsdaten relativ zu den Achsen (x, y), die dieselben verschiedenen Objektpositionen entlang der Kreisbahn darstellen, in Beziehung zu setzen, wobei die Vergleichsmittel (102-3) und die Ausgabemittel (102-4, 102-4') dazu geeignet sind, die entsprechenden tatsächlichen und gewünschten Pfadpositionsdaten an jeder der Objektpfadpositionen zu vergleichen und um Signale, die die tatsächlichen und gewünschten Objektpfadpositionen darstellen, an einen Drucker (104) oder Plotter bzw. Zeichengerät (104b) zu senden bzw. auszugeben, um eine erste kreisförmige Anzeige bereitzustellen, die die tatsächliche Objektbewegung entlang der Kreisbahn darstellt, und eine zweite kreisförmige Anzeige, die die erste Anzeige überlagert, so dass der Objektpositionsfehler an den verschiedenen Pfadpositionen visuell bzw. optisch erkennbar ist.

7. System nach Anspruch 6, wobei das Synchronisierungsmittel (102) Mittel enthält, die ein Aufnehmen der sequenziell erzielten Objektpositionsdaten entlang jeder der Achsen zu nach dem Zufallsprinzip ausgewählten Startzeiten zulassen, indem die maximalen, minimalen und mittleren (d.h. die halbe Strecke zwischen dem Minimum und Maximum) tatsächlichen und gewünschten Objektpositionsdatenwerte identifiziert werden und die gespeicherten Daten so neugeordnet werden, dass die maximalen, mittleren und minimalen Objektpositionswerte der Daten für eine Achse (x, y) in Beziehung zu den mittleren, minimalen und maximalen Werten der für die andere Achse (y, x) genommenen Daten stehen.

8. System nach Anspruch 6, wobei die Signalverarbeitungsmittel Vervielfältigungs- bzw. Multiplikationsmittel (102g) enthalten, um die Objektpositionsfehlerdaten zu multiplizieren und die multiplizierten Daten mit den tatsächlichen Positionsdaten neu zu kombinieren, so dass die erste kreisförmige Anzeige, die den tatsächlichen Objektpfad darstellt, beim Ausgeben an den Drucker (104a) oder den Plotter (104b) leicht zu erkennen ist, obgleich sie an die zweite kreisförmige Anzeige, die den gewünschten Objektpfad darstellt, angrenzt.

9. System nach einem der vorhergehenden Ansprüche, bei dem ein anderes Strahllenkungsmittel (1A-1, 1A-2, 1A-3) für jede der Achsen (x, y, z) vorgesehen und so ausgerichtet ist, dass sein Strahl parallel zu der zugehörigen Achse gerichtet wird, und wobei dort ein anderes des wenigstens einen Reflektierungsmittels (30, 33, 34), das mit einem Strahllenkungsmittel assoziiert ist, befestigt ist, um den Strahl zu kreuzen bzw. zu schneiden, der von dem assoziierten Strahllenkungsmittel gerichtet wird, und wobei Mittel zum gleichzeitigen Betätigen des Strahllenkungsmittels (1A-1, 1A-2, 1A-3) vorgesehen sind, um die tatsächlichen Objektpositionsdaten gleichzeitig zu sammeln und zu verarbeiten.

10. System nach einem der vorhergehenden Ansprüche, wobei jedes von dem einen oder von mehreren Strahllenkungs- (1A) und den zugehörigen Strahlreflektierungsmitteln (2, 3, 18, 32, 33, 36, 38, 48, 50, 52) ein Objektpositionsmesssystem mit einem großen Rückstrahler und einem Planspiegel bilden.

11. System nach einem der vorhergehenden Ansprüche, wobei das Objekt entlang dem Pfad bewegt werden soll, auf dem an einigen seiner Pfadpositionen das Objekt wünschenswerterweise rotiert oder gedreht werden soll, um eine gewünschte winkelförmige Bewegung zu bewirken, und wobei zusätzliche Strahllenkungs-, Reflektor- und Verarbeitungsmittel vorgesehen sind, um die tatsächliche winkelförmige Bewegung des Objekts an jeder der Pfadpositionen zu messen, und um die tatsächlichen mit den gewünschten winkelförmigen Bewegungen des Objekts dort zu vergleichen, um ein Maß für die Genauigkeit der winkelförmigen Bewegung des Objektbewegungsapparats anzugeben.

12. System nach einem der vorhergehenden Ansprüche, wobei die Größe der Reflektierungsfläche der Strahlreflektierungsmittel (2, 9, 18, 30, 22) 25 cm oder 30 cm im Durchmesser beträgt.

13. Verfahren zur Bestimmung des Grads an Genauigkeit, mit der ein Objekt entlang einem vorgegebenen Pfad in einem Raum mit wenigstens zwei orthogonalen Achsen (x, y) bewegt wird,
wobei das Verfahren das Objektbewegen durch Motoren (106c, 106c') zum Weitergeben der Objektbewegung relativ zu den entsprechenden Achsen (x, y) umfasst, um einen Gesamtobjektbewegungsteil herzustellen,
wobei das Verfahren das Speichern der gewünschten Objektpfadpositionsdaten relativ zu den Achsen (x, y) zu verschiedenen Referenzzeiten umfasst,
wobei das Verfahren das Erzeugen bzw. Generieren von motoransteuernden Signalen für die Motoren (106c, 106c') umfasst, die auf die gewünschten Pfadpositionsdaten reagieren, um wünschenswerterweise das Objekt entlang dem gewünschten Pfad innerhalb einer vorgegebenen Toleranz an seitlicher bzw. lateraler Verschiebung zu bewegen,
wobei das Verfahren ferner die Schritte umfasst:

m) Bereitstellen eines oder mehrerer Strahllenkungsmittel (1A), um wenigstens einen Strahl (4, 11) aus Energie parallel zu einer von jeder der wenigstens zwei orthogonalen Achsen (x, y) zu richten,
n) Bereitstellen eines oder mehrerer Strahlreflektierungsmittel (2, 9, 18, 30, 33, 34, 36, 38, 48, 50, 51), die mit den Strahllenkungsmitteln (1A) verbunden bzw. assoziiert sind, um jeden der Strahlen (4, 11) aus Energie entlang einem oder mehreren Strahlpfaden zu reflektieren, die jeden Strahl ultimativ zu seinem zugehörigen Strahllenkungsmittel (1A) zurückführen,
wobei wenigstens eines der Reflektierungsmittel (2, 9, 18, 30, 33, 34, 36, 38, 48, 50, 51), die mit dem Strahllenkungsmittel (1A) assoziiert sind, das zuerst den gerichteten Strahl aufnimmt, wenigstens so groß wie die vorgegebene Toleranz an seitlicher Verschiebung ist,
und wobei eines dieser Strahllenkungsmittel (1A) und wenigstens ein damit assoziiertes Reflektierungsmittel (2, 9, 18, 30, 33, 34, 36, 38, 48, 50, 51) wie folgt angeordnet sind: eines der Mittel ist auf dem Objekt befestigt und das andere Mittel ist auf einer Fläche befestigt, die in Bezug auf das Objekt relativ ortsfest ist,
o) Bereitstellen von Signalverarbeitungsmitteln (102), die Mittel enthalten, die auf die Rückkehr bzw. Rücksendung jedes reflektierten Strahls aus Energie zu dem assoziierten Strahllenkungsmittel (1A) reagieren, um tatsächliche Objektpfadpositionsdaten zu entwickeln, die die tatsächliche Verschiebung des Objekts relativ zu den Achsen (x, y) zu Abtastzeiten angeben, die mit den Referenzzeiten zusammenfallen, und
p) Bereitstellen von Datensammelmitteln und Speichermitteln (102-2), um die gewünschten und tatsächlichen Objektpfadpositionsdaten in Bezug auf die Achsen (x, y) zu den Abtastzeiten zu sammeln und zu speichern, und Bereitstellen von Vergleichsmitteln (102-3), um die gespeicherten gewünschten und tatsächlichen Pfadpositionsdaten zu den Abtastzeiten zu vergleichen und Bereitstellen von Ausgabemitteln (102-4, 102-4'), um den Pfadpositionsfehler bzw. -abweichungsgrad in Bezug auf die Achsen zu den Abtastzeiten anzugeben, und
q) Richten des einen oder mehrerer Strahlen (4, 11, 29) parallel zu den Achsen (x, y) und Betreiben des Objektbewegungsapparates, um den Körper entlang einem angenommenen gewünschten Pfad zu bewegen, während das Signalverarbeitungsmittel (102) die tatsächlichen Objektpfadpositionsdaten entwickelt, sammelt und speichert, die gespeicherten gewünschten und tatsächlichen Pfadpositionsdaten vergleicht und den Grad an Positionsabweichung angibt, der sich aus dem Vergleichsvorgang ergibt.

14. Verfahren nach Anspruch 13, wobei ein separates Strahllenkungsmittel (1A-1, 1A-2, 1A-3) für jede der Achsen (x, y, z) vorgesehen ist und die separaten Strahllenkungsmittel (1A-1, 1A-2, 1A-3, 16) jeweils gleichzeitig entlang den Achsen gerichtet werden, um die Objektpfadpositionsdaten zu sammeln.

15. Verfahren nach Anspruch 13, wobei nur eines der Strahllenkungsmittel (1A) vorgesehen ist, das sequenziell entlang den Achsen (x, y) gelenkt wird, wenn das Objekt entlang dem angenommenen gewünschten Pfad bewegt wird, wenn das Verarbeitungsmittel (102) dann sequenziell die Funktionen hiervon ausführt.

16. Verfahren nach Anspruch 15, wobei Synchronisierungsmittel (102-5) in den Verarbeitungsmitteln vorgesehen sind, um die tatsächlichen sequenziell erhaltenen Objektpositionsdaten relativ zu den entsprechenden Achsen (x, y) in Bezug zueinander zu setzen, aufgenommen in zeitlicher Abfolge zu denselben Positionen des Objekts entlang seinem Bewegungspfad, dem folgend die Verarbeitungsmittel die Vergleichsfunktion ausführen.

17. Verfahren nach Anspruch 16, wobei das Verarbeitungsmittel zuerst die Positionsabweichungs- bzw. -fehlerdaten multipliziert (102g), die vervielfachten Fehlerdaten mit den gewünschten Objektpositionsdaten bezüglich der beiden Achsen kombiniert und die Anzeige (102h) einer ersten vorgegebenen nicht perfekten bzw. unvollkommenen kreisförmigen Kurve bzw. Kreislinie bewirkt, die die modifizierte tatsächliche Kreisbahn des Objekts in der Ebene darstellt, und die die gewünschten Objektpositionsdaten bezüglich der Achsen (x, y) kombiniert und über der ersten vorgegebenen unvollkommenen Kreislinie die Anzeige (102h) der Kreislinie bewirkt, die durch die tatsächlichen Objektpositionsdaten bezüglich der Achsen erzeugt wird.

18. Verfahren nach einem der Ansprüche 12 - 17, wobei das Vergleichsmittel (102-3, 102-3') zuerst den Pfadpositionsfehler bezüglich der Achsen berechnet und dann die Achsenpositionsfehler kombiniert, um eine Angabe zum Polarpositionsfehler vorzusehen.

## Revendications

1. Système pour déterminer le degré de précision avec lequel un objet est déplacé le long d'une trajectoire donnée dans un espace ayant au moins deux axes orthogonaux (x, y),

ce système comprenant un appareil de déplacement d'objet (106) qui comprend des moteurs (106c, 106c'), destinés chacun à imposer un mouvement de l'objet par rapport auxdits axes respectifs (x, y) pour produire une trajectoire de mouvement globale de l'objet, ledit appareil comprenant des moyens de programmation (106a, 106a') avec une mémoire adaptée à stocker les données de position concernant la trajectoire désirée pour l'objet en relation auxdits axes (x, y) à divers instants de référence,

ledit système comprenant des moyens de génération (106b, 106b') qui réagissent auxdites données de position concernant la trajectoire désirée pour générer des signaux d'excitation de moteurs destinés auxdits moteurs (106c, 106c') pour déplacer de façon désirable ledit objet le long de ladite trajectoire désirée à l'intérieur de tolérances données vis-à-vis du déplacement latéral,

ledit système comprenant en outre :

a1) soit plus d'un moyen de direction de faisceau (1A) adaptés à diriger simultanément au moins un faisceau (29, 35, 37, 40, 43, 45, 47, 49, 51) d'énergie parallèle auxdits axes (x, y),
a2) soit un unique moyen de direction de faisceau (1A) adapté à diriger en séquence au moins un faisceau (4, 11, 17) d'énergie parallèlement à l'un desdits axes (x, y) à la fois ;
b) ledit système comprenant en outre au moins un moyen de réflexion de faisceau (2, 9, 30, 33, 34, 36, 38, 48, 50, 51) associé à chaque moyen de direction de faisceau (IA) et positionné pour recevoir directement le faisceau (x, y) depuis le moyen de direction de faisceau (IA) qui lui est associé ;
dans lequel l'un au moins desdits moyens de direction de faisceau (IA) et desdits moyens de réflexion (2, 9, 18, 30, 33, 34, 36, 38, 48, 50, 51) qui lui est associé est susceptible d'être monté sur ledit objet, et l'autre de ces moyens est susceptible d'être monté sur une surface qui est relativement stationnaire par rapport audit objet, dans lequel ledit au moins un moyen de réflexion (2, 9, 30, 33, 34, 36, 38, 48, 50, 51) associé au moyen de direction de faisceau (IA) est au moins aussi grand que lesdites tolérances données quant au déplacement latéral pour réfléchir ledit faisceau dirigé (4, 11, 17, 29, 35, 37, 40, 43, 45, 47, 49, 51) pour finalement retourner le faisceau vers ledit moyen de direction de faisceau (IA) ;
c) ledit système comprenant en outre des moyens de traitement de signaux (102) qui incluent des moyens réagissant au retour de chaque faisceau réfléchi (5, 12, 14) d'énergie vers le moyen de direction de faisceau (IA) associé pour développer des données de position réelle concernant la trajectoire de l'objet qui indiquent le déplacement réel dudit objet par rapport auxdits axes (x, y) à des instants d'échantillonnage qui coïncident avec lesdits instants de référence ; et
d) ledit système comprenant en outre des moyens de traitement additionnels, qui incluent des moyens de collecte de données, des moyens de stockage (102-2), des moyens de comparaison (102-3) et des moyens de fourniture de données (102-4, 102-4') pour collecter et stocker lesdites données de position de trajectoire désirée et lesdites données de position de trajectoire réelle de l'objet par rapport auxdits axes (x, y) auxdits instants de référence et auxdits instants d'échantillonnage, et pour comparer les données de position désirée et lesdites données de position réelle stockées auxdits instants de référence et auxdits instants d'échantillonnage, pour indiquer le degré d'erreur en position par rapport auxdits axes (x, y) auxdits instants d'échantillonnage.

2. Système selon la revendication 1, dans lequel ledit au moins un moyen de réflexion (2, 9, 30, 33, 34, 48, 50, 51) associé à un chaque moyen de direction de faisceau (lA) est un miroir plan (9, 18, 36, 38).

3. Système selon la revendication 2, dans lequel le moyen directeur de faisceau associé (lA) inclut un moyen formant lentille (16, 16') pour diriger un faisceau divergent vers ledit miroir plan (9, 18, 36, 38).

4. Système selon l'une des revendications précédentes, dans lequel il est prévu un moyen séparé de direction de faisceau (1A-1, 1A-2, 1A-3) pour chaque axe (x, y, z), de sorte que trois faisceaux (40, 43, 45) peuvent être simultanément dirigés le long de chacun desdits axes, pour collecter simultanément lesdites données de position réelle de l'objet.

5. Système selon l'une des revendications précédentes, dans lequel il est prévu un seul desdits moyens de direction de faisceau (1A) pour diriger un unique faisceau (4, 11, 17) en séquence lorsqu'il est repositionné pour procéder ainsi parallèlement auxdits divers axes orthogonaux (x, y) lorsque ledit appareil de déplacement d'objet (31) répète le mouvement dudit objet le long d'un trajet désiré supposé, pour développer en séquence lesdites données de position réelles concernant la trajectoire de l'objet par rapport auxdits axes respectifs (x, y), et lesdits moyens de traitement incluent des moyens de synchronisation (102) pour mettre en relation les données de position réelle de l'objet par rapport auxdits axes respectifs (x, y) prises en séquence temporelle auxdits instants d'échantillonnage avec les mêmes positions dudit objet le long de sa trajectoire de mouvement.

6. Système selon la revendication 5, adapté pour collecter et traiter des données de position d'un objet lorsque l'objet doit être déplacé de façon désirable dans une trajectoire circulaire dans un plan donné ayant deux axes orthogonaux (x, y) et lorsque ladite unique source de faisceau (1A) doit diriger son faisceau (4, 11) en séquence le long desdits axes (x, y) dans ledit plan ; et lesdits moyens de synchronisation (102) incluent des moyens de comparaison (102-3) pour mettre en relation les données de position concernant la trajectoire de l'objet par rapport auxdits axes (x, y) représentant les mêmes diverses positions de l'objet le long de la trajectoire circulaire, et lesdits moyens de comparaison (102-3) et lesdits moyens de fourniture (102-4, 102-4') étant adaptés à comparer les données de position de trajectoire réelle et les données de position de trajectoire désirée à chacune desdites positions de la trajectoire de l'objet, et à délivrer des signaux représentant les positions réelles et les positions désirées de la trajectoire de l'objet vers une imprimante (104a) ou un traceur (104b) pour fournir un premier affichage semblable à un cercle représentant le mouvement de l'objet réel le long de ladite trajectoire circulaire et un second affichage circulaire en superposition audit premier affichage, de sorte que l'erreur de position de l'objet aux diverses positions de la trajectoire est visuellement perceptible.

7. Système selon la revendication 6, dans lequel lesdits moyens de synchronisation (102) incluent des moyens permettant de saisir à des instants de départ aléatoires les données de position concernant l'objet et obtenues en séquence, le long de chacun desdits axes, en identifiant le maximum, le minimum et la moyenne (c'est-à-dire à mi-chemin entre le minimum et le maximum) des valeurs de données de position réelle et désirée concernant l'objet et en réarrangeant les données stockées de sorte que les valeurs des données de position maximum, moyenne et minimum concernant l'objet pour un axe (x, y) sont en relation avec les valeurs moyenne, minimum et maximum pour les données saisies pour l'autre axe (y, x).

8. Système selon la revendication 6, dans lequel lesdits moyens de traitement de signaux incluent des moyens de multiplication (102g) pour multiplier les données d'erreur de position concernant l'objet et recombiner les données multipliées avec les données de position réelle de sorte que, lorsqu'elles sont délivrées à ladite imprimante (104a) ou audit traceur (104b), le premier affichage semblable à un cercle représentant la trajectoire réelle de l'objet peut être aisément vu, bien qu'il soit adjacent audit second affichage circulaire représentant la trajectoire désirée de l'objet.

9. Système selon l'une des revendications précédentes, dans lequel il est prévu un moyen de direction de faisceau (1A-1, 1A-2, 1A-3) différent pour chacun desdits axes (x, y, z) et orienté pour diriger son faisceau parallèlement à l'axe associé, et il est prévu un moyen différent parmi lesdits au moins un moyen de réflexion (30, 33, 34) associé à un moyen de direction de faisceau monté pour intercepter le faisceau dirigé depuis le moyen de direction de faisceau associé, et il est prévu des moyens pour actionner simultanément lesdits moyens de direction de faisceau (1A-1, 1A-2, 1A-3) pour collecter et traiter simultanément les données de position réelle concernant l'objet.

10. Système selon l'une des revendications précédentes, dans lequel chacun desdits un ou plusieurs moyens de direction de faisceau (1A) et moyens de réflexion de faisceau associés (2, 3, 18, 32, 33, 36, 38, 48, 50, 52) forme un système de mesure de position d'objet avec un grand rétroréflecteur et un miroir plan.

**11.** Système selon l'une des revendications précédentes, dans lequel l'objet doit être déplacé le long de ladite trajectoire et de sorte qu'à certaines des positions de la trajectoire l'objet doit être désirablement mis en rotation ou en pivotement en produisant un mouvement angulaire désiré ; et il est prévu additionnellement des moyens de direction de faisceau, des moyens de réflexion et des moyens de traitement pour mesurer le mouvement angulaire réel de l'objet à chacune desdites positions de la trajectoire et pour comparer le mouvement angulaire réel avec le mouvement angulaire désiré de l'objet à ses positions pour fournir une mesure de l'exactitude du mouvement angulaire de l'appareil de déplacement d'objet.

**12.** Système selon l'une des revendications précédentes, dans lequel la taille de la surface réfléchissante des moyens de réflexion de faisceau (2, 9, 18, 30, 33) a un diamètre de 25 cm ou 30 cm.

**13.** Procédé pour déterminer le degré de précision avec lequel un objet est déplacé le long d'une trajectoire donnée dans un espace ayant au moins deux axes orthogonaux (x, y),
le procédé comprenant de déplacer l'objet par des moteurs (106c, 106c') pour imposer un mouvement à l'objet par rapport auxdits axes respectifs (x, y) et produire une trajectoire de mouvement globale pour l'objet, ledit procédé comprenant de stocker les données de position désirée pour la trajectoire de l'objet par rapport auxdits axes (x, y) à divers instants de référence,
le procédé comprenant de générer des signaux d'excitation de moteur pour lesdits moteurs (106c, 106c') en réponse auxdites données de position désirée pour la trajectoire afin de déplacer de façon désirable ledit objet le long de ladite trajectoire désirée à l'intérieur de tolérances données quant au déplacement latéral, ledit procédé comprenant en outre les étapes consistant à :

m) fournir un ou plusieurs moyens de direction de faisceau (IA) pour diriger au moins un faisceau (4, 11) d'énergie parallèlement à l'un de chacun desdits au moins deux axes orthogonaux (x, y) ;
n) fournir un ou plusieurs moyens de réflexion de faisceau (2, 9, 18, 30, 33, 34, 36, 38, 48, 50, 51) associés à des moyens de direction de faisceau (IA) pour réfléchir chacun desdits faisceaux (4, 11) d'énergie le long d'une ou plusieurs trajectoires de faisceau qui vont finalement retourner chaque faisceau en retour vers le moyen de direction de faisceau qui lui est associé (IA),
dans lequel l'un au moins des moyens de réflexion (2, 9, 18, 30, 33, 34, 36, 38, 48, 50, 51) associé au moyen de direction de faisceau (IA) qui reçoit en premier le faisceau dirigé est au moins aussi grand que lesdites tolérances données quant au déplacement latéral,
et dans lequel un des moyens parmi lesdits moyens de direction de faisceau (IA) et lesdits au moins un moyen de réflexion (2, 9, 18, 30, 33, 34, 36, 38, 48, 50, 51) associé à celui-ci sont montés de la manière suivante :

l'un desdits moyens est monté sur ledit objet et l'autre desdits moyens est monté sur une surface qui est relativement stationnaire par rapport audit objet,

o) fournir des moyens de traitement de signaux (102) incluant des moyens qui réagissent au retour de chaque faisceau d'énergie réfléchi vers les moyens de direction de faisceau associé (IA) pour développer des données de position réelle concernant la trajectoire de l'objet qui indiquent le déplacement réel dudit objet par rapport auxdits axes (x, y) à des instants d'échantillonnage qui coïncident avec lesdits instants de référence ;
p) fournir des moyens de collecte de données et des moyens de stockage (102-2) pour collecter et stocker lesdites données de position de trajectoire désirée et lesdites données de position de trajectoire réelle concernant l'objet par rapport auxdits axes (x, y) auxdits instants d'échantillonnage, et fournir des moyens de comparaison (102-3) pour comparer les données de position désirée et les données de position réelle concernant la trajectoire, et fournir des moyens de délivrance (102-4, 102-4') pour indiquer le degré d'erreur de position de trajectoire par rapport auxdits axes auxdits instants d'échantillonnage ; et
q) diriger lesdits un ou plusieurs faisceaux (4, 11, 29) parallèlement auxdits axes (x, y), et mettre en fonctionnement ledit appareil de déplacement d'objet pour déplacer ledit objet le long d'une trajectoire désirée supposée pendant que lesdits moyens de traitement de signaux (102) développent, collectent et stockent lesdites données de position réelle concernant la trajectoire de l'objet, comparent les données de position désirée et les données de position réelle stockées concernant la trajectoire et indiquent le degré d'erreur de position résultant de ladite opération de comparaison.

**14.** Procédé selon la revendication 13, dans lequel il est prévu des moyens de direction de faisceau séparés (1A-1, 1A-2, 1A-3) pour chacun desdits axes (x, y, z), et lesdits moyens de direction de faisceau séparés (1A-1, 1A-2, 1A-3, 16) sont simultanément dirigés, respectivement, le long desdits axes simultanément pour collecter lesdites données de position concernant la trajectoire de l'objet.

**15.** Procédé selon la revendication 13, dans lequel il est prévu un seul desdits moyens de direction de faisceau (IA) qui est dirigé en séquence le long desdits axes (x, y) alors que ledit objet est déplacé le long de la trajectoire désirée supposée et que lesdits moyens de traitement (102) exécutent alors en séquence leurs fonctions.

**16.** Procédé selon la revendication 15, dans lequel il est prévu des moyens de synchronisation (102-5) dans lesdits moyens de traitement pour mettre en relation les données de position réelle concernant l'objet obtenues en séquence et en relation avec lesdits axes respectifs (x, y), saisies en séquence temporelle aux mêmes positions dudit objet le long de sa trajectoire de déplacement, suite à quoi lesdits moyens de traitement effectuent ladite fonction de comparaison.

**17.** Procédé selon la revendication 16, dans lequel lesdits moyens de traitement effectuent en premier une multiplication (102g) des données d'erreur de position, une combinaison des données d'erreur multipliées avec lesdites données de position désirée pour l'objet par rapport auxdits deux axes, et effectuent l'affichage (102h) d'une première courbe imparfaite donnée semblable à un cercle, représentant la trajectoire circulaire réelle modifiée dudit objet dans ledit plan, et combinent lesdites données de position désirée pour l'objet par rapport auxdits axes (x, y), et effectuent l'affichage (102h) par-dessus ladite première courbe donnée circulaire imparfaite de la courbe circulaire produite par lesdites données de position réelle pour l'objet par rapport auxdits axes.

**18.** Procédé selon l'une des revendications 12 à 17, dans lequel lesdits moyens de comparaison (102-3, 102-3') calculent en premier l'erreur de position de trajectoire par rapport auxdits axes, et combinent ensuite l'erreur de position par rapport aux axes pour donner une indication de l'erreur de position polaire.

# FIG. 1

# FIG. 2

# FIG. 3

# FIG. 4

FIG. 5

FIG. 6

FIG. 7

# FIG. 8

## FIG. 9A

## FIG. 9B

## FIG. 9C

## FIG. 10A

X

120mm

70mm

20mm

TS | TA | TB | TC | TD | TA | TIME

## FIG. 10B

Y

120mm

70mm

20mm

TS' | TA' TB' TC' TD' | TIME

## FIG. 11

X

Y

## FIG. 10C

Y

120mm

70mm

20mm

TS' | TA' TB' TC' TD' | TIME

## FIG. 12A

PROGRAM MACHINE TO
MAKE A CIRCULAR PATH

POINT BEAM IN X DIRECTION

POINT BEAM IN Y DIRECTION

COLLECT X DATA

COLLECT AND
SYNCH. Y DATA

COMBINE X AND Y DATA,
CALCULATE, INDICATE
AND PLOT DEVIATIONS

## FIG. 12B

INPUT ACTUAL
X-AXIS
DATA FILE

102a

CONVERT TO
ASCII
FILE

102b

102c

SYNCH. OR
REARRANGE
DATA
(IF NECESSARY)

102d

COMPUTE,
AND
STORE
X DATA
FOR EACH
POSITION

INPUT ACTUAL
Y-AXIS
DATA FILE

102a'

CONVERT TO
ASCII
FILE

102b'

102d'

COMPUTE,
AND
STORE
Y DATA
FOR EACH
POSITION

102f

COMPUTE AND
STORE POLAR
ERROR

102g

MULTIPLY X-Y
POS. ERROR AND
ADD TO DESIRED
DATA

102h

PRINT
SEQUENTIALLY
DESIRED AND
MODIFIED ACTUAL
DISPLACEMENT
CIRCLES

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4714339 A
- US 5387969 A
- US 5428446 A
- US 5116126 A
- US 5394233 A